# DEMANDE DE BREVET EUROPEEN

(11) **EP 3 273 313 A1**
(43) Date de publication de la demande: **24.01.2018**
(21) Numéro de dépôt: 16180207.9
(22) Date de dépôt: 19.07.2016
(51) Int. Cl.: G04R 60/08, G04G 21/04

(54) **ÉLÉMENT D'HABILLAGE D'ASPECT MÉTALLIQUE À SYSTÈME DE COMMUNICATION INTÉGRÉ**

(71) Demandeur: The Swatch Group Research and Development Ltd., 2074 Marin (CH)
(72) Inventeur: FERRI, Yvan, 1004 Lausanne (CH); CURCHOD, Loïc, 1004 Lausanne (CH)
(74) Mandataire: Goulette, Ludivine

(57) **Abrégé**

L'invention concerne un élément d'habillage (10) d'une pièce d'horlogerie comportant une partie inférieure (100b) et une partie supérieure (100a) réalisées dans un matériau isolant et s'assemblant pour former ledit élément d'habillage, la partie inférieure et la partie supérieure étant agencées pour laisser apparaitre un logement entre elles comprenant un système de communication.

## Description

La présente invention concerne un élément d'habillage d'une pièce d'horlogerie réalisé en un premier matériau et présentant un logement comprenant un système de communication.

### ARRIÈRE-PLAN TECHNOLOGIQUE

La présente invention concerne une lunette tournante ou non pour pièce d'horlogerie.

Des systèmes de lunettes tournantes ou non sont connus. Un système de lunette tournante comprend une lunette annulaire possédant une face supérieure et une face inférieure, la face supérieure étant la face visible par l'utilisateur. Cette lunette peut comprendre une denture coopérant avec un élément ressort pour systèmes de lunettes tournantes. Cette coopération entre l'élément ressort et la denture de la lunette permet alors d'avoir une lunette rotative pas à pas.

Avec l'arrivée des fonctions de communication sans fil à courte distance du type RFID, il a été nécessaire de trouver des espaces pour les systèmes de communication. Une solution a été d'intégrer ces systèmes de communication dans la glace ou dans le joint de glace. Il est également connu une lunette, idéalement dans une matière non conductrice comme de la céramique, munie d'une creusure formant un logement dans lequel le système de communication constitué d'au moins un circuit électronique et d'une antenne est placé. Le tout est alors rempli avec une résine et refermé avec un capot ou équivalent non conducteur.

Toutefois, ce type de construction est difficilement possible si la lunette et/ou le capot sont en métal conducteur des ondes radiofréquences. En effet, cela pose des problèmes de perturbations qui vont dégrader fortement, voire empêcher la fonction de communication. De même, si la boîte de montre est métallique, les performances du système de communication peuvent être perturbées et donc limitées Le fait de passer sur des matériaux non conducteurs assure la fonction, mais ne permet donc pas d'avoir ni un aspect ni un éclat métallique.

### RÉSUMÉ DE L'INVENTION

L'invention a pour but de pallier les inconvénients de l'art antérieur.

A cet effet, l'invention concerne un élément d'habillage d'une pièce d'horlogerie comportant un corps réalisé dans un matériau isolant électriquement, ledit corps étant agencé pour comprendre un logement, caractérisé en ce qu'il comprend en outre un système de communication agencé dans le logement et en ce qu'au moins une partie de la surface dudit élément d'habillage présente une couche d'aspect métallique. Une telle couche d'aspect métallique signifie que cette couche présente la couleur et l'éclat du métal.

Cet élément d'habillage présente l'avantage d'être réalisé en un matériau isolant de sorte qu'il ne perturbe pas le système de communication sans fil tout en ayant un aspect métallique de sorte que ledit élément d'habillage s'accorde avec l'objet/le bracelet sur lequel il est monté.

Dans un premier mode de réalisation avantageux, ledit corps de la lunette comprend une partie inférieure et une partie supérieure s'assemblant pour former ledit élément d'habillage, la partie inférieure et la partie supérieure étant agencées pour laisser apparaître un logement entre elles.

Dans un second mode de réalisation avantageux, la partie inférieure et la partie supérieure sont réalisées en céramique.

Dans un troisième mode de réalisation avantageux, la couche d'aspect métallique est une couche rapportée sur la surface dudit élément d'habillage.

Dans un quatrième mode de réalisation avantageux, la couche d'aspect métallique est la surface de l'élément d'habillage carburée.

Dans un cinquième mode de réalisation avantageux, la couche d'aspect métallique est la surface de l'élément d'habillage nitrurée.

Dans un sixième mode de réalisation avantageux, la couche d'aspect métallique a une épaisseur comprise entre 10 et 200 nm.

Dans un autre mode de réalisation avantageux, la couche d'aspect métallique a une épaisseur comprise entre 10 et 2000 nm.

L'invention concerne en outre une pièce d'horlogerie, comprenant un boitier comprenant une carrure fermée par un fond et une glace, et munie d'une lunette, caractérisée en ce que la lunette est l'élément d'habillage selon l'une des revendications précédentes.

Dans un premier mode de réalisation avantageux, la carrure comprend un épaulement défini par une paroi latérale et une base, et dans lequel la lunette est agencée.

### BRÈVE DESCRIPTION DES FIGURES

Les buts, avantages et caractéristiques du système de lunette selon la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente une vue générale de la présente invention ;
- les figures 2 et 3 représentent deux vues détaillées de la lunette faisant office d'élément d'habillage selon la présente invention ;
- la figure 4 représente un premier mode de réalisation de la présente invention ;
- la figure 5 représente un second mode de réalisation de la présente invention ;
- les figures 6A et 6B représentent deux autres exemples de réalisation de la lunette selon la présente invention.

### DESCRIPTION DÉTAILLÉE

La présente invention procède de l'idée générale inventive qui consiste à procurer un système de lunette tournante ou pas, étant plus simple à monter, et permettant une fonction de communication sans fil du type RFID.

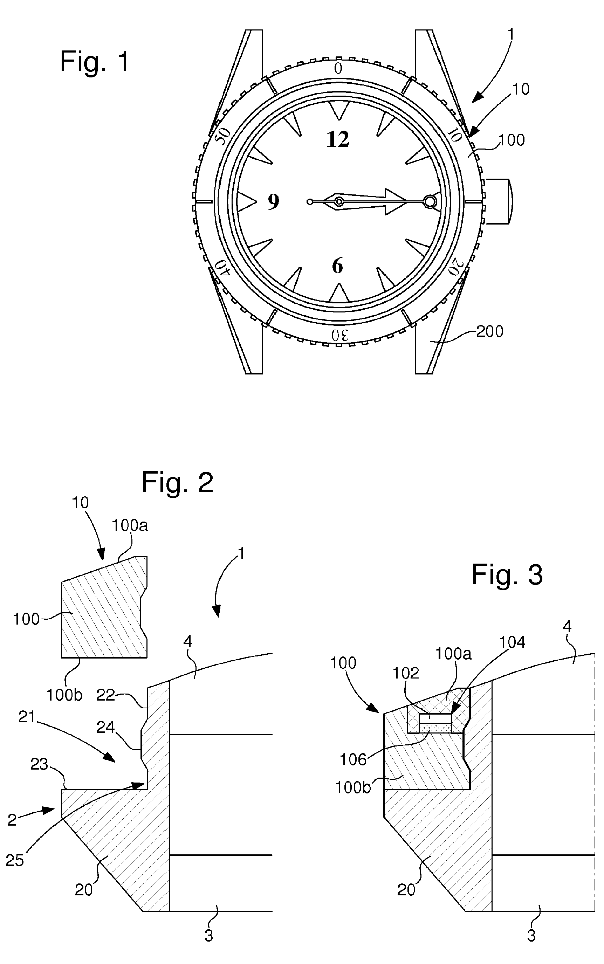

Les figures 1 et 2 montrent un élément d'habillage 10 telle une lunette 100 selon l'invention, cette lunette 100 étant montée sur une pièce d'horlogerie 1 qui comprend un boitier 2 fermé par un fond 3 et une glace 4. Cette lunette 100 est une pièce de forme annulaire qui comprend une face supérieure directement visible par l'utilisateur et une face inférieure.

Cette lunette 100 peut être montée tournante ou non au niveau de la carrure. Dans le cas d'une lunette 100 tournante, un ensemble ressort-crantage ou système à encliquetage (non représenté) est agencé. Cet ensemble ressort-crantage comprend des moyens ressorts et un élément denté. Un des éléments de l'ensemble ressort-crantage sera angulairement solidaire de la carrure alors que l'autre sera angulairement solidaire de la lunette 100 de sorte à permettre l'indexation angulaire de la lunette par rapport à la carrure.

Pour le montage de la lunette 100, la pièce d'horlogerie comprend une carrure 20 dans laquelle un épaulement 21 est agencé, cet épaulement 21 étant défini par une paroi latérale 22 et une base 23. Cet épaulement sert de logement pour la lunette. En général, la paroi latérale 22 comprend une excroissance 24 s'étendant sur l'intégralité du périmètre de la paroi latérale 22. Cette excroissance 24 permet de définir, en coopération avec la base 23 et la paroi 22, une gorge de maintien 25. Cette gorge de maintien 25 permet, lors de l'assemblage à force de la lunette, que celle-ci s'y insère et soit maintenue.

Avantageusement selon l'invention, la lunette 100 est munie d'un système de communication sans fil 102 comme visible à la figure 3.

Dans un exemple préféré, la lunette 100 est réalisée de sorte à comprendre un corps composé d'une partie inférieure 100b (corps principal) et d'une partie supérieure 100a (insert décoratif ou minuterie). Cette partie supérieure 100a et cette partie inférieure 100b sont donc agencées pour s'assembler afin de former ladite lunette. La partie inférieure et la partie supérieure sont astucieusement réalisées de sorte qu'une rainure 104 servant de logement soit présente. Cette rainure peut être agencée sur la partie supérieure ou sur la partie inférieure ou être formée par deux surfaces complémentaires : une sur la partie supérieure et une sur la partie inférieure. Cette rainure est périphérique c'est-à-dire s'étendant sur la périphérie de la lunette, mais n'est pas forcément de dimensions constantes. Cette rainure 104 sert alors de logement afin d'y placer le système de communication sans fil. Ce système de communication sans fil 102 peut comprendre un support c'est-à-dire un circuit imprimé dont la forme est similaire à celle de la rainure 104 agencée sur la lunette, c'est-à-dire une forme de bague. Dans le cas présent, le circuit imprimé sert de substrat pour une antenne en boucles et les différents composants électroniques permettant le fonctionnement du système de communication y sont agencés. Le système de communication peut utiliser le protocole de communication NFC (Near-Field Communication).

Le tout est alors placé dans la rainure 104 de la lunette 100 faisant office de logement.

Pour fermer le tout, un matériau polymère par exemple du type caoutchouc peut être surmoulé directement dans la rainure 104 formant un surmoulage 106 comme visible à la figure 3. Cette opération de surmoulage classique est destinée à recouvrir totalement le système de communication sans fil 102 ayant une forme de bague. Ce recouvrement total permet d'une part d'assurer une bonne étanchéité du système puisque le matériau polymère s'insère dans toute la rainure 104 empêchant ainsi les liquides de s'insérer. Il est également possible de remplir la rainure par d'autres moyens, comme l'injection classique, la sérigraphie ou la distribution ( en anglais dispensing) de résine. Une fois la rainure remplie, le système de communication sans fil est ainsi maintenu mécaniquement et peut résister sans problème aux contraintes de chocs et de variations thermiques.

D'autre part, un second avantage de cette réalisation est qu'elle permet de rendre moins aisé l'accès frauduleux aux données souvent cryptées qui sont stockées dans le circuit de communication. En effet, les systèmes de communication 102 pour cette lunette 100 peuvent utiliser des protocoles de communication sans contact de type NFC ou RFID ou autre moyen de télécommunication sans fil. Cette lunette peut donc être utilisée comme 'Tag' ou étiquette électronique pour la reconnaissance (ou le suivi) de produit. Elle peut aussi être utilisée pour des fonctions de paiement ce qui implique que les données embarquées sont sensibles. Par conséquent, le fait de surmouler un polymère sur le système de communication 102 rend plus difficile la récupération d'informations car il devient nécessaire de dissoudre ce polymère avant d'avoir accès au circuit électronique.

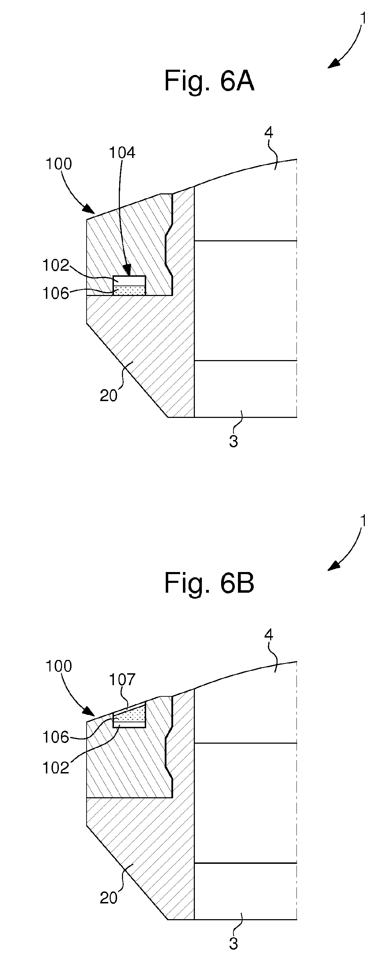

Dans un autre exemple de réalisation visible aux figures 6A et 6B, la lunette 100 se présente sous la forme d'un corps unique muni d'une rainure 104 faisant office de logement pour le système de communication sans fil 102. Cette rainure 104 peut être agencée sur une des faces du corps formant la lunette 100 qu'elle soit visible ou en regard de la carrure 20. Dans le cas où la rainure 104 est agencée sur l'une des faces en regard de la carrure 20, la rainure sera remplie par exemple par un surmoulage 106 en polymère, plastique ou caoutchouc pour recouvrir totalement le système de communication sans fil 102 et assurer une bonne étanchéité. Dans le cas où la rainure 104 est agencée sur l'une des faces visibles de la lunette, cette rainure permet d'y placer le système de communication 102 qui sera ensuite surmoulé avec du caoutchouc ou autre polymère. Il est également possible que la rainure 104 soit fermée via un capot 107 réalisé dans le même matériau que la lunette 100 ou un autre matériau contrastant avec le matériau de la lunette de manière décorative. Ce capot peut être collé ou chassé ou encore brasé sur la lunette.

Selon l'invention, la lunette 100 est réalisée de sorte à éviter de perturber le système de communication sans fil 102. En effet, le montage du système de communication dans une lunette métallique, en acier par exemple, entraine des dysfonctionnements dudit système de communication dû à l'écrantage des champs électromagnétiques (EM) par le matériau métallique de la lunette.

L'invention se propose donc de réaliser la lunette en un matériau isolant électriquement mais présentant tout de même un aspect métallique sur tout ou au moins une partie de sa surface visible. Le matériau choisi ici est un matériau céramique. Un tel matériau est choisi pour ses propriétés isolantes évitant toutes perturbations du circuit de communication sans fil. Mais ce matériau est aussi choisi pour sa résistance mécanique aux rayures notamment ainsi que pour son coté plus noble qu'un matériau plastique, qui peut aussi être envisagé.

La partie inférieure et la partie supérieure sont donc réalisées en matériau céramique.

Astucieusement, la lunette reçoit un traitement lui permettant d'avoir un aspect similaire à celui de la boite de montre. En effet, la boite de montre réalisée en matériau métallique présente un aspect métallique alors que la céramique utilisée pour l'élément d'habillage, ici une lunette, présente un aspect totalement différent qui peut nuire à l'esthétique globale du produit. Ce traitement confère donc un aspect métallique à la surface de la lunette en céramique. Ledit aspect métallique est accompagné de propriétés métalliques, notamment une conductivité non-nulle mais suffisamment faible et sur une épaisseur suffisamment mince pour laisser passer les ondes électromagnétiques reçues et/ou émises par le système de communication sans fil logé dans la lunette.

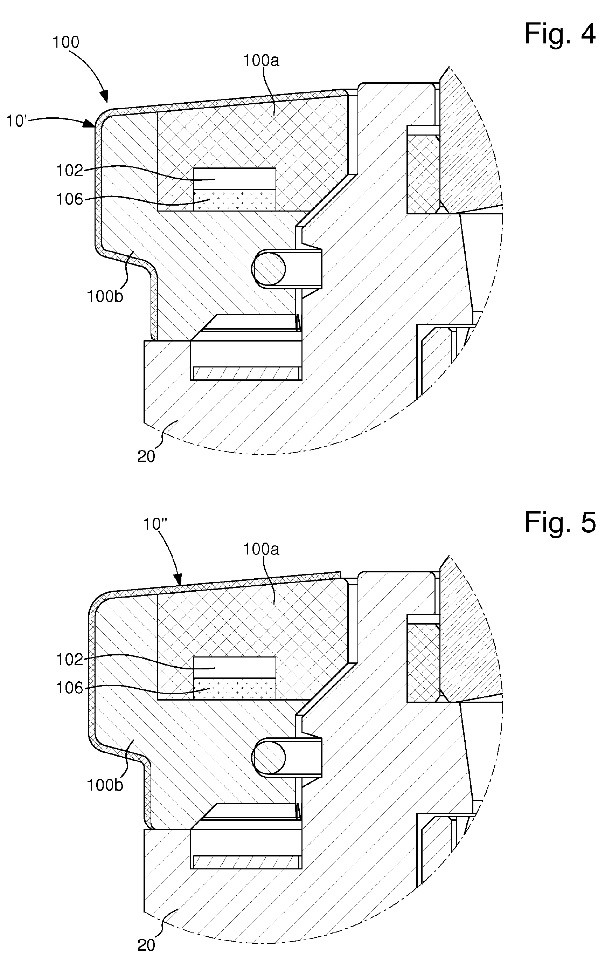

Dans un premier mode de réalisation visible à la figure 4, le traitement de l'élément d'habillage 10 est un traitement de carburation ou de nitruration. Une telle étape de carburation/nitruration consiste à modifier la composition chimique de la pièce (en remplaçant l'oxygène de la céramique d'origine par du carbone ou de l'azote, respectivement). Une telle méthode consiste donc à placer la pièce à carburer/nitrurer, par exemple la lunette 100 constituée d'une partie ou de deux parties 100a et 100b, dans une enceinte dont l'atmosphère contient des atomes de carbone ou d'azote respectivement et à activer par chauffage la surface de la pièce à carburer/nitrurer uniformément sur toute sa surface ou dans des zones choisies 10'. La surface de l'élément d'habillage 10 est alors chauffée à une température comprise entre 700 et 1100°C pendant une durée de 30 à 180 minutes. Sous l'effet de cette température les atomes de carbone ou d'azote de l'atmosphère de l'enceinte se combinent avec la surface en céramique dans les zones 10' de l'élément d'habillage 10. Avantageusement, il s'agit d'une transformation de la surface des zones 10' de l'élément d'habillage 10 sur une certaine épaisseur en carbure ou nitrure ayant un aspect métallique de couleur proche du platine ou de l'or respectivement, sans risque de détérioration par pelage comme pourrait le faire un dépôt métallique.

Plus particulièrement, la couche superficielle 10' qui présente la structure du carbure de zirconium ou du nitrure de zirconium s'étend à partir de la surface sur une profondeur moyenne comprise entre 10 et 200 nm. Cette épaisseur présente l'avantage d'offrir à l'élément d'habillage 10 un aspect métallique tout en étant suffisamment fin pour éviter de perturber le système de communication sans fil.

Dans un second mode de réalisation visible à la figure 5, le traitement permettant à l'élément d'habillage 10 d'avoir un aspect métallique consiste à déposer une couche 10". Cette couche déposée est une couche métallique, d'oxyde, de nitrure, de carbure, de borure ou une combinaison à la surface en céramique de l'élément d'habillage 10 par une méthode de dépôt de couche par voie humide ou sous atmosphère contrôlée, de préférence PVD. Cette couche aura une épaisseur d'environ 10nm à 2-3µm.

Dans une variante de ces deux modes de réalisation, on comprendra que le traitement de l'élément d'habillage peut être réalisé sur la totalité de la surface de l'élément d'habillage ou n'être que partiel. Dans le cas où le traitement est partiel, le traitement se fera sur la surface de l'élément d'habillage qui sera visible pour l'utilisateur. En effet, pour une lunette, une partie de la surface se trouve en regard de l'épaulement de la boite de montre alors que l'autre partie de la surface est visible par l'utilisateur. Aussi, la sélectivité du traitement de l'élément d'habillage peut avoir un but esthétique, par exemple pour faire apparaître des index, des chiffres, un logo ou tout autre élément décoratif.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Ainsi, il pourra être prévu la présence d'un joint entre la partie inférieure et la partie supérieure de la lunette afin d'améliorer l'étanchéité.

On comprendra aussi que l'élément d'habillage peut être un maillon de bracelet, le fond d'une boite de montre ou toute autre pièce d'habillage en céramique contenant un système de communication sans fil.

## Revendications

1. Elément d'habillage (10) d'une pièce d'horlogerie comportant un corps réalisé dans un matériau isolant, ledit corps étant agencé pour comprendre un logement (104), **caractérisé en ce qu'**il comprend en outre un système de communication sans fil (102) agencé dans le logement (104) et **en ce qu'**au moins une partie (10') de la surface dudit élément d'habillage présente une couche d'aspect métallique.

2. Elément d'habillage (10) selon la revendication 1, **caractérisé en ce que** le corps dudit élément d'habillage comprend une partie inférieure (100b) et une partie supérieure (100a) s'assemblant pour former ledit élément d'habillage, la partie inférieure et la partie supérieure étant agencées pour laisser apparaître un logement 104 entre elles.

3. Elément d'habillage (10) selon la revendication 2, **caractérisé en ce que** la partie inférieure (100b) et/ou la partie supérieure (100a) sont réalisées en céramique.

4. Elément d'habillage (10) selon l'une des revendications précédentes, **caractérisé en ce que** la couche d'aspect métallique est une couche (10") rapportée sur la surface dudit élément d'habillage.

5. Elément d'habillage (10) selon l'une des revendications 1 à 3, **caractérisé en ce que** la couche d'aspect métallique est la surface (10') de l'élément d'habillage carburée.

6. Elément d'habillage (10) selon l'une des revendications 1 à 3, **caractérisé en ce que** la couche d'aspect métallique est la surface (10') de l'élément d'habillage nitrurée.

7. Elément d'habillage (10) selon l'une des revendications 5 ou 6, **caractérisé en ce que** la couche d'aspect métallique a une épaisseur moyenne comprise entre 10 et 200 nm

8. Elément d'habillage (10) selon la revendication 4, **caractérisé en ce que** la couche d'aspect métallique a une épaisseur comprise entre 10 et 2000 nm.

9. Pièce d'horlogerie (1) comprenant un boitier (2) comprenant une carrure (20) fermée par un fond (3) et une glace (4) et munie d'une lunette (100), **caractérisée en ce que** la lunette (100) est l'élément d'habillage (10) selon l'une des revendications précédentes.

10. Pièce d'horlogerie selon la revendication 9, **caractérisée en ce que** la carrure comprend un épaulement (21) défini par une paroi latérale (22) et une base (23) et dans lequel la lunette est agencée.
